(19) Europäisches Patentamt
European Patent Office
Office européen des brevets

(11) **EP 4 693 588 A1**

(12) **EUROPEAN PATENT APPLICATION**

(43) Date of publication:
**11.02.2026 Bulletin 2026/07**

(21) Application number: **25195019.2**

(22) Date of filing: **09.08.2025**

(51) International Patent Classification (IPC):
**H01M 10/0587** $^{(2010.01)}$    **H01M 4/02** $^{(2006.01)}$

(52) Cooperative Patent Classification (CPC):
**H01M 10/0587; H01M 2004/021; H01M 2004/028**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **09.08.2024 KR 20240106861**

(71) Applicant: **SK On Co., Ltd.**
**Seoul 03161 (KR)**

(72) Inventors:
 • **LEE, Yong Seok**
   **34124 Daejeon (KR)**
 • **LEE, Jae Myoung**
   **34124 Daejeon (KR)**
 • **KIM, Byung Mook**
   **34124 Daejeon (KR)**

 • **NAM, Hai Sol**
   **34124 Daejeon (KR)**
 • **RHO, Mi So**
   **34124 Daejeon (KR)**
 • **PARK, Kyung Tae**
   **34124 Daejeon (KR)**
 • **PARK, Byeong Hyeon**
   **34124 Daejeon (KR)**
 • **PARK, Jong Hun**
   **34124 Daejeon (KR)**
 • **LEE, Hye Ryeon**
   **34124 Daejeon (KR)**
 • **HUR, Yoo Jung**
   **34124 Daejeon (KR)**

(74) Representative: **Stolmár & Partner**
**Patentanwälte PartG mbB**
**Blumenstraße 17**
**80331 München (DE)**

(54) **SECONDARY BATTERY**

(57)    A secondary battery according to embodiments of the present disclosure comprises an electrode assembly, which comprises a cathode, an anode disposed opposite to the cathode, and a separation membrane disposed between the cathode and the anode, which is wound around a winding core. The cathode comprises a cathode current collector having a first surface and a second surface that face each other, a first cathode active material layer disposed on the first surface, and a second cathode active material layer disposed on the second surface. A loading amount gap between the first cathode active material layer and the second cathode active material layer, and a diameter of the winding core satisfy a predetermined relationship.

FIG. 1

EP 4 693 588 A1

**Description**

**TECHNICAL FIELD**

The present disclosure relates to a secondary battery.

**BACKGROUND**

A secondary battery is a battery that can be repeatedly charged and discharged. With the rapid progress of information and communication technology and display industries, the secondary battery has been widely applied to various portable electronic telecommunication devices such as a camcorder, a mobile phone, a laptop computer, etc. as their power sources. Recently, a battery pack including the secondary battery has also been developed and applied to eco-friendly automobiles such as an electric vehicle, a hybrid vehicle, etc., as their power sources.

Examples of the secondary battery may include a lithium secondary battery, a nickelcadmium battery, a nickel-hydrogen battery and the like. Among them, the lithium secondary battery has a high operating voltage and a high energy density per unit weight, making it advantageous in terms of charging speed and lightweight design. In this regard, the lithium secondary battery has been actively developed and applied to various industrial fields.

Recently, as the application scope of lithium secondary batteries continues to expand, the development of secondary batteries with higher stability and reliability has been underway. For example, components such as lithium may precipitate during repeated charging and discharging of the secondary battery, which may reduce the long-term durability of the secondary battery. Accordingly, there is a need in the art to address problems associated with lithium precipitation during charging and recharging of secondary batteries, thereby enhancing their capacity and longevity.

**SUMMARY**

According to an aspect of the present disclosure, it is an object to provide a secondary battery capable of exhibiting improved stability and operating reliability, through the prevention of lithium precipitation during charging/recharging cycles.

A secondary battery according to embodiments of the present disclosure comprises an electrode assembly which comprises a cathode, an anode disposed opposite to the cathode, and a separation membrane disposed between the cathode and the anode, which is wound around a winding core. The cathode comprises: a cathode current collector including a first surface and a second surface that face each other; a first cathode active material layer disposed on the first surface; and a second cathode active material layer disposed on the second surface.

The secondary battery satisfies Equation 1 below.

$$[\text{Equation 1}]$$

$$Y = AX^2 - BX + C$$

In Equation 1, X denotes a diameter of the winding core, Y denotes a loading amount gap defined by Equation 2 below, A is 0.0062 to 0.013, B is 0.1242 to 0.2622, and C is 0.943 to 1.9907.

$$[\text{Equation 2: Loading amount gap (mg/cm}^2) = LW2 - LW1}$$

In Equation 2, LW1 denotes a loading amount (mg/cm$^2$) of the first cathode active material layer, and LW2 denotes a loading amount (mg/cm$^2$) of the second cathode active material layer.

In some embodiments, the first cathode active material layer may be positioned closer to the winding core than the second cathode active material layer.

In some embodiments, X in Equation 1 may be 3 mm to 8 mm.

In some embodiments, the loading amount gap may be 0.3 mg/cm$^2$ to 1.1 mg/cm$^2$.

In some embodiments, the loading amount gap may be 0.45 mg/cm$^2$ to 0.8 mg/cm$^2$.

In some embodiments, LW1 in Equation 2 may be 7.6 mg/cm$^2$ to 49.6 mg/cm$^2$.

In some embodiments, LW2 in Equation 2 may be 8 mg/cm$^2$ to 50 mg/cm$^2$.

In some embodiments, an overall density of the first cathode active material layer and the second cathode active material layer may be 3.2 g/cm$^3$ to 3.8 g/cm$^3$.

In some embodiments, an average of LW1 and LW2 of Equation 2 may be 16 mg/cm$^2$ to 30 mg/cm$^2$.

In some embodiments, the secondary battery may further comprise a case in which the electrode assembly is accommodated. In some embodiments, the case may have a cylindrical shape.

In some embodiments, the electrode assembly may include a jelly roll structure repeatedly wound around the winding core.

According to an embodiment of the present disclosure, precipitation of an internal cathode material (e.g., lithium) may be prevented.

According to an embodiment of the present disclosure, the cycle life characteristics of the secondary battery may be improved.

The secondary battery of the present disclosure may be widely applied in green technology fields, such as electric vehicles, battery charging stations, as well as solar power generation, wind power generation, and the like, which use the batteries. The secondary battery of the present disclosure may be used in eco-friendly electric vehicles, hybrid vehicles, and the like, which are aimed at mitigating climate change by reducing air pollution and greenhouse gas emission.

## BRIEF DESCRIPTION OF THE DRAWINGS

The above and other objects, features and other advantages of the present disclosure will be more clearly understood from the following detailed description taken in conjunction with the accompanying drawings, in which:

FIG. 1 is a schematic cross-sectional view illustrating a cathode for a secondary battery according to exemplary embodiments;

FIGS. 2 and 3 are schematic plan and cross-sectional views respectively, illustrating a secondary battery according to exemplary embodiments;

FIG. 4 is a graph illustrating Equation 1; and

FIG. 5 is a schematic cross-sectional view illustrating an anode according to exemplary embodiments.

## DETAILED DESCRIPTION

According to exemplary embodiments, a secondary battery is provided.

Hereinafter, the embodiments of the present disclosure will be described in detail. However, these embodiments are merely examples, and the present disclosure is not limited to the specific embodiments described as examples.

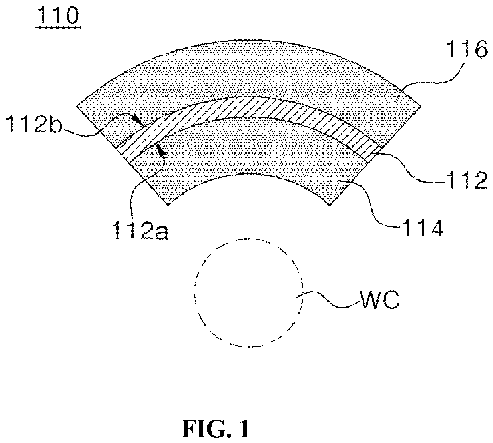

FIG. 1 is a schematic cross-sectional view illustrating a cathode for a secondary battery according to exemplary embodiments.

Referring to FIG. 1, a cathode 110 may comprise a cathode current collector 112, a first cathode active material layer 114 and a second cathode active material layer 116.

The cathode current collector 112 may comprise stainless steel, nickel, aluminum, titanium or an alloy thereof. The cathode current collector 112 may also comprise aluminum or stainless steel having a surface treated with carbon, nickel, titanium or silver. For example, the cathode current collector 112 may have a thickness of 10 to 50 $\mu$m.

The cathode current collector 112 may include a first surface 112a and a second surface 112b that face each other.

The first cathode active material layer 114 may be disposed on the first surface 112a of the cathode current collector 112, and the second cathode active material layer 116 may be disposed on the second surface 112b.

In one embodiment, the first cathode active material layer 114 may be directly disposed on the first surface 112a.

In one embodiment, the second cathode active material layer 116 may be directly disposed on the second surface 112b.

In some embodiments, the cathode 110 may be bent in a direction that encloses a winding center WC based on an imaginary winding center WC.

For example, the first cathode active material layer 114 may be positioned closer to the winding center WC and/or the winding core 50 than the second cathode active material layer 116. For example, the winding center WC may represent a winding core 50 of the secondary battery.

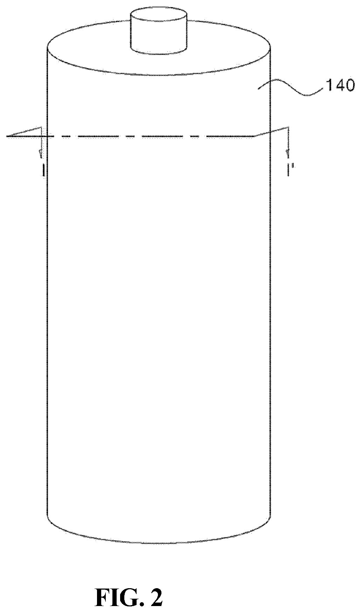

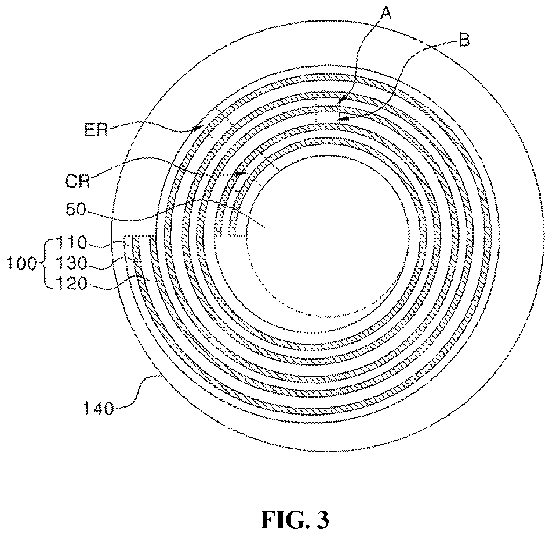

The detailed structure of the secondary battery will be described below with reference to FIGS. 2 and 3.

In exemplary embodiments, the first cathode active material layer 114 and the second cathode active material layer 116 may each include a cathode active material.

For example, the cathode active material may comprise a lithium-nickel metal oxide. The lithium-nickel metal oxide may further comprise at least one of cobalt (Co), manganese (Mn) and aluminum (Al).

In some embodiments, the cathode active material or the lithium-nickel metal oxide may comprise a layered structure or a crystal structure represented by Formula 1 below.

[Formula 1] $\quad Li_xNi_aM_bO_{2+z}$

In Formula 1, x, a, b and z may satisfy $0.9 \leq x \leq 1.2$, $0.5 \leq a \leq 0.99$, $0.01 \leq b \leq 0.5$, $-0.5 \leq z \leq 0.1$. As described above, M may include Co, Mn and/or Al.

The chemical structure represented by Formula 1 indicates a bonding relationship between elements included in the layered structure or crystal structure of the cathode active material, and does not exclude other additional elements. For example, M may comprise Co and/or Mn, and Co and/or Mn may be provided as main active elements of the cathode active material together with Ni. Here, it should be understood that Formula 1 is provided to express the bonding relationship between the main active elements, and is a formula encompassing the introduction and substitution of additional elements.

In one embodiment, the cathode active material may further include auxiliary elements which are added to the main active elements, in order to enhance chemical stability or the layered structure/crystal structure thereof. The auxiliary element may be incorporated into the layered structure/crystal structure together with the main active elements to form a bond, and it should be understood that this case is also included within the chemical structure range represented by Formula 1.

The auxiliary element may comprise, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr. The auxiliary element may act as an auxiliary active element which contributes to the capacity/output activity of the cathode active material together with Co or Mn like Al.

For example, the cathode active material or the lithium-nickel metal oxide may include a layered structure or crystal structure represented by Formula 1-1 below.

$$[\text{Formula 1-1}] \qquad Li_xNi_aM1_{b1}M2_{b2}O_{2+z}$$

In Formula 1-1, M1 may comprise Co, Mn and/or Al. M2 may comprise the above-described auxiliary elements. In Formula 1-1, x, a, b1, b2 and z may satisfy $0.9 \leq x \leq 1.2$, $0.5 \leq a \leq 0.99$, $0.01 \leq b1+b2 \leq 0.5$, $-0.5 \leq z \leq 0.1$.

The cathode active material may further comprise a coating element or a doping element in addition to the above-described boron. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may exist on the surface of lithium-nickel metal oxide particles, or may penetrate through the surface of the lithium-nickel metal oxide particles to become incorporated into the bonding structure represented by Formula 1 or Formula 1-1 above.

The cathode active material may comprise a nickel-cobalt-manganese (NCM)-based lithium oxide. In this case, an NCM-based lithium oxide having an increased content of nickel may be used.

Ni may be provided as a transition metal associated with the output and capacity of the lithium secondary battery. Therefore, as described above, by employing a high-content (high-Ni) composition in the cathode active material, a high-capacity cathode and a high-capacity lithium secondary battery may be provided.

However, as the Ni content increases, the long-term storage stability and cycle life stability of the cathode 110 or the secondary battery may relatively decrease, and side reactions with the electrolyte may also increase. According to exemplary embodiments, the cycle life stability and capacity retention characteristics may be improved through increasing Mn while maintaining electrical conductivity by including Co.

The content of Ni (e.g., the mole fraction of nickel based on the total molar amounts of nickel, cobalt and manganese) in the NCM-based lithium oxide may be 0.5 or more, 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., $LiFePO_4$).

In some embodiments, the cathode active material may comprise, for example, a lithium (Li)-rich layered oxide (LLO)/over-lithiated oxide (OLO)-based active material, a manganese (Mn)-rich active material, or a cobalt (Co)-less active material, which have a chemical structure or a crystal structure represented by Formula 2 below. These may be used alone or in combination of two or more thereof.

$$[\text{Formula 2}] \qquad p[Li_2MnO_3] \cdot (1-p)[Li_qJO_2]$$

In Formula 2, p and q may satisfy $0 < p < 1$ and $0.9 \leq q \leq 1.2$, and J may comprise at least one element of Mn, Ni, Co, Fe, Cr, V, Cu, Zn, Ti, Al, Mg and B.

The content of the cathode active material based on the total weight of the first cathode active material layer 114 may be 40% by weight ("wt%") or more, 50 wt% or more, 60 wt% or more, 70 wt% or more, 80 wt% or more, or 90 wt% or more.

The content of the cathode active material based on the total weight of the first cathode active material layer 114 may be 99 wt% or less, 95 wt% or less, 90 wt% or less, or 85 wt% or less.

The content of the cathode active material based on the total weight of the second cathode active material layer 116 may be 40 wt% or more, 50 wt% or more, 60 wt% or more, 70 wt% or more, 80 wt% or more, or 90 wt% or more.

The content of the cathode active material based on the total weight of the second cathode active material layer 116 may be 99 wt% or less, 95 wt% or less, 90 wt% or less, or 85 wt% or less.

The cathode active material described above may be mixed in a solvent to prepare a cathode slurry. The cathode slurry may be coated or deposited on the first surface 112a and the second surface 112b of the cathode current collector 112, respectively, and then dried and roll-pressed to prepare the first cathode active material layer 114 and the second cathode active material layer 116. The coating may include a method such as gravure coating, slot die coating, simultaneous multilayer die coating, imprinting, doctor blade coating, dip coating, bar coating, casting or the like.

The first and second cathode active material layers 114 and 116 may each further comprise a binder and optionally further comprise a thickener or the like.

The solvent may comprise N-methyl-2-pyrrolidone (NMP), dimethylformamide, dimethylacetamide, N,N-dimethylaminopropylamine, ethylene oxide, tetrahydrofuran, or the like.

The binder may comprise polyvinylidene fluoride (PVDF), poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR) or the like. These binders may be used alone or in combination of two or more thereof.

In one embodiment, a PVDF-based binder may be used as the cathode binder. In this case, the amount of binder used for forming the first and second cathode active material layers 114 and 116 may be reduced, and the amount of cathode active material may be relatively increased. Accordingly, the output performance and capacity characteristics of the secondary battery may be improved.

The cathode slurry may further comprise a thickener and/or a dispersant. In one embodiment, the cathode slurry may further comprise a thickener such as carboxymethyl cellulose (CMC).

FIGS. 2 and 3 are schematic plan and cross-sectional views illustrating a lithium secondary battery according to exemplary embodiments, respectively. For example, FIG. 3 is a cross-sectional view taken along line I-I' of FIG. 2.

In some embodiments, the winding core 50 may have a diameter of 3 mm to 8 mm. Within the above range, the electrode may be sufficiently accommodated, thereby improving the capacity characteristics of the secondary battery, and the difference in loading amount between the first cathode active material layer 114 and the second cathode active material layer 116 may be appropriately adjusted. Accordingly, the cycle life characteristics and operational reliability may be improved.

An electrode assembly 100 may comprise the above-described cathode 110, an anode 120 disposed opposite to the cathode 110, and a separation membrane 130 disposed between the cathode 110 and the anode 120.

In some embodiments, the secondary battery may include a jelly roll structure in which the electrode assembly 100 is repeatedly wound around the winding core 50.

In one embodiment, the electrode assembly 100 may be placed on a core pin, repeatedly wound around the core pin, and then the core pin may be removed to form the jelly roll structure.

In one embodiment, the winding core 50 may represent a void formed by removing the core pin. In one embodiment, the size and shape of the winding core 50 may be substantially the same as the size and shape of the core pin. In one embodiment, the diameter of the winding core 50 may be substantially the same as the diameter of the core pin.

In one embodiment, the core pin may include a metal and/or an alloy.

In one embodiment, the anode 120, the separation membrane 130, and the cathode 110 may be sequentially and repeatedly stacked by the winding process.

In one embodiment, the anode 120, the cathode 110, and the separation membrane 130 may be stacked and wound such that the separation membrane 130 is disposed between each of the anode 120 and the cathode 110.

In one embodiment, according to the winding process, a sequentially stacked structure of the anode 120, the separation membrane 130, the cathode 110, the separation membrane 130, the anode 120, the separation membrane 130 and the cathode 110 may be repeatedly formed on the winding core 50.

In exemplary embodiments, the secondary battery may satisfy Equation 1 below.

[Equation 1]

$$Y = AX^2 - BX + C$$

In Equation 1, X denotes a diameter of the winding core 50, Y denotes a loading amount gap defined by Equation 2 below, A is 0.0062 to 0.013, B is 0.1242 to 0.2622, and C is 0.943 to 1.9907.

[Equation 2]

$$\text{Loading amount gap (mg/cm}^2) = LW2 - LW1$$

In Equation 2, LW1 denotes a loading amount (mg/cm$^2$) of the first cathode active material layer 114, and LW2 denotes a loading amount (mg/cm$^2$) of the second cathode active material layer 116.

As used herein, the term "loading amount" may refer to a weight (mg) per unit area (1 cm$^2$).

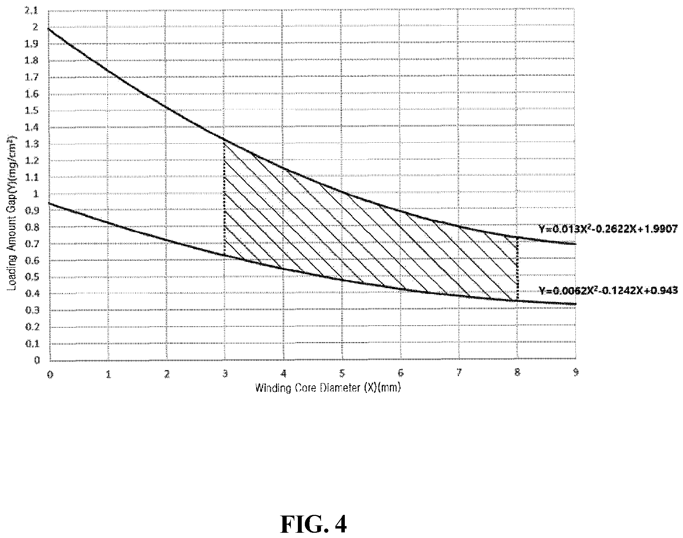

FIG. 4 is a graph illustrating Equation 1.

According to embodiments satisfying Equation 1, the (X, Y) coordinates representing the winding core diameter (X) and the loading amount gap (Y) of the secondary battery may be located in a region between two quadratic curves shown in FIG. 4.

In FIG. 4, the hatched region represents an area in which the (X, Y) coordinates of some embodiments having a winding core 50 diameter (X) of 3 mm to 8 mm are located, but the positions of the (X, Y) coordinates of the embodiments of the present disclosure are not limited to the hatched region.

When the (X, Y) coordinates of the secondary battery satisfy Equation 1, variations in electrode capacity due to position on the cathode are minimized, thereby preventing precipitation of internal cathode materials (e.g., lithium) and allowing the capacity of the cathode 110 to be sufficiently enhanced, which may maintain or improve the capacity retention rate.

For example, depending on the diameter (X) of the winding core 50, the loading amount gap (Y) is adjusted within a certain range (e.g., the region between the two quadratic curves shown in FIG. 4), thereby improving the capacity expression rate of the secondary battery depending on the diameter of the winding core 50 and enhancing long-term cycle life characteristics and operational reliability.

In some embodiments, the loading amount gap may be 0.3 mg/cm$^2$ to 1.1 mg/cm$^2$. In one embodiment, the loading amount gap may be 0.45 mg/cm$^2$ to 0.8 mg/cm$^2$. Within the above range, differences in electrode capacity depending on the position are alleviated, thereby preventing precipitation of internal cathode materials (e.g., lithium) and allowing the capacity of the cathode 110 to be sufficiently enhanced, which may maintain or improve the capacity retention rate.

In some embodiments, the loading amount (LW1) of the first cathode active material layer 114 may be 7.6 mg/cm$^2$ to 49.6 mg/cm$^2$. Within this range, the capacity characteristics of the cathode 110 may be enhanced, and the operational reliability may also be improved.

In some embodiments, the loading amount (LW2) of the second cathode active material layer 116 may be 8 mg/cm$^2$ to 50 mg/cm$^2$. Within this range, the capacity characteristics of the cathode 110 may be enhanced, and the operational reliability may also be improved.

In some embodiments, an overall density of the first cathode active material layer 114 and the second cathode active material layer 116 may be 3.2 g/cm$^3$ to 3.8 g/cm$^3$. Within this range, the density of the cathode 110 may be variably adjusted, while the above-described lithium precipitation may be suppressed and the operational reliability may be improved.

The "overall density" may refer to a ratio of the total mass of the first cathode active material layer 114 and the second cathode active material layer 116 to the total volume of the first cathode active material layer 114 and the second cathode active material layer 116.

In some embodiments, an average of the loading amount (LW1) of the first cathode active material layer 114 and the loading amount (LW2) of the second cathode active material layer 116 may be 16 mg/cm$^2$ to 30 mg/cm2. Within this range, the above-described lithium precipitation may be suppressed, and operational reliability may be improved, while the loading amounts (LW1, LW2) of the first cathode active material layer 114 and the second cathode active material layer 116 may be variably adjusted.

In some embodiments, the difference between the CA ratio of a core portion CR closest to the winding core 50, as defined by Equation 3 below, and the CA ratio of an end portion ER farthest from the winding core 50 may be 0% to 0.2%.

[Equation 3]

$$\text{CA ratio (\%)} = (CC / CA) \times 100$$

In Equation 3, CC denotes the discharge capacity (mAh/g) of the cathode 110 of the secondary battery, and CA denotes the discharge capacity (mAh/g) of the anode 120 of the secondary battery.

Within the above range, the capacity expression rate of the electrode assembly 100 depending on the position may be more uniform.

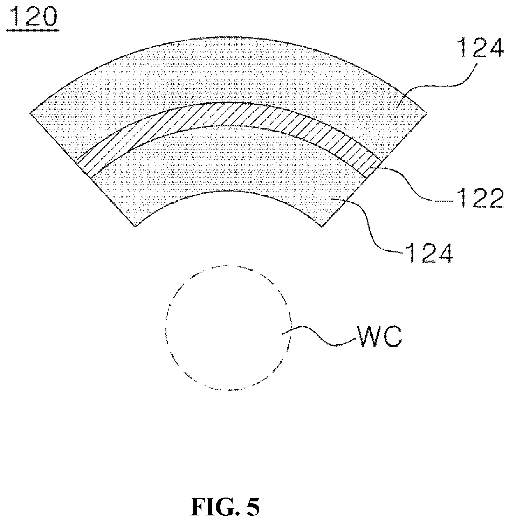

FIG. 5 is a schematic cross-sectional view illustrating an anode according to exemplary embodiments.

Referring to FIG. 5, the anode 120 may include an anode current collector 122, and an anode active material layer 124 disposed on at least one surface of the anode current collector 122. In one embodiment, the anode active material layers 124 may be disposed on both surfaces of the anode current collector 122.

For example, the anode current collector 122 may comprise a copper foil, a nickel foil, a stainless steel foil, a titanium foil, a nickel foam, a copper foam, a polymer substrate coated with a conductive metal or the like. These may be used alone or in combination of two or more thereof. In one embodiment, the anode current collector 122 may have a thickness of 10 $\mu$m to 50 $\mu$m.

The anode active material layer 124 may comprise an anode active material. A material capable of intercalating and deintercalating lithium ions may be used as the anode active material. For example, the anode active material may comprise crystalline carbon-based materials such as crystalline carbon, amorphous carbon, a carbon composite, carbon fibers; lithium metal; a lithium alloy; a silicon (Si)-containing material, a tin (Sn)-containing material or the like. These may be used alone or in combination of two or more thereof.

The amorphous carbon may comprise hard carbon, soft carbon, cokes, mesocarbon microbeads (MCMB), mesophase pitch-based carbon fibers (MPCF) or the like.

The crystalline carbon may comprise graphite-based carbons such as natural graphite, artificial graphite, graphite cokes, graphite MCMB, graphite MPCF, or the like.

The lithium metal may comprise pure lithium metal and/or lithium metal having a protective layer formed thereon for suppressing dendrite growth or the like. In one embodiment, a lithium metal-containing layer deposited or coated on the anode current collector 122 may be used as the anode active material layer 124. In one embodiment, a lithium thin-film layer may be used as the anode active material layer 124.

Elements comprising the lithium alloy may include aluminum, zinc, bismuth, cadmium, antimony, silicon, lead, tin, gallium, indium, or the like. These may be used alone or in combination of two or more thereof.

The silicon-containing material may provide more enhanced capacity characteristics. The silicon-containing material may comprise Si, SiOx (0<x<2), metal-doped SiOx (0<x<2), a silicon-carbon composite, or the like.

The metal may comprise lithium and/or magnesium, and the metal-doped $SiO_x$ (0<x<2) may comprise a metal silicate.

An anode slurry may be prepared by mixing the anode active material in a solvent. The anode slurry may be coated or deposited on the anode current collector 122, and then dried and roll-pressed to prepare the anode active material layer 124. The coating process may be performed using methods such as gravure coating, slot die coating, simultaneous multilayer die coating, imprinting, doctor blade coating, dip coating, bar coating, casting, or the like. The anode active material layer 124 may further comprise a binder, and optionally may further comprise a conductive material and/or a thickener.

The solvent in the anode slurry may comprise water, pure water, deionized water, distilled water, ethanol, isopropanol, methanol, acetone, n-propanol, t-butanol or the like. These may be used alone or in combination of two or more thereof.

In some embodiments, the above-described materials that can be used when preparing the cathode 110 as the binder, conductive material and thickener may be additionally be used for the anode.

In some embodiments, a styrene-butadiene rubber (SBR)-based binder, carboxymethyl cellulose (CMC), polyacrylic acid-based binder, or poly(3,4-ethylenedioxythiophene (PEDOT)-based binder, or the like, may be used as an anode binder. These may be used alone or in combination of two or more thereof.

The separation membrane 130 may be configured to prevent an electrical short-circuit between the cathode 110 and the anode 120, and to allow a flow of ions therethrough. For example, the separation membrane may have a thickness of 10 $\mu$m to 20 $\mu$m.

In some embodiments, the separation membrane 130 may comprise a porous polymer film or a porous nonwoven fabric.

The porous polymer film may comprise a polyolefin-based polymer such as an ethylene polymer, a propylene polymer, an ethylene/butene copolymer, an ethylene/hexene copolymer, or an ethylene/methacrylate copolymer. These may be used alone or in combination of two or more thereof.

The porous nonwoven fabric may comprise glass fibers having a high melting point. In some embodiments the porous nonwoven fabric may comprise polyethylene terephthalate fibers or the like.

The separation membrane 130 may also comprise a ceramic-based material. For example, inorganic particles may be coated on the polymer film or dispersed within the polymer film to improve heat resistance.

The separation membrane 130 may have a single-layer or multi-layer structure comprising the above-described polymer film and/or nonwoven fabric.

In some embodiments, the secondary battery may further comprise a case 140 in which the electrode assembly 100 is accommodated.

For example, the electrode assembly 100 may be accommodated in the case 140 together with an electrolyte to define a lithium secondary battery. In some exemplary embodiments, a non-aqueous electrolyte may be used as the electrolyte.

The non-aqueous electrolyte may comprise a lithium salt of an electrolyte and an organic solvent, wherein the lithium salt may be represented by, $Li^+X^-$, and wherein $(X^-)$ of the lithium salt may comprise $F^-$, $Cl^-$, $Br$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$ or the like.

The organic solvent may comprise propylene carbonate (PC), ethylene carbonate (EC), butylene carbonate, diethyl carbonate (DEC), dimethyl carbonate (DMC), ethyl methyl carbonate (EMC), methyl propyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethylpropionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfoxide, acetonitrile, diethoxyethane, sulfolane, gamma-butyrolactone, propylene sulfite, or the like. These may be used alone or in combination of two or more thereof.

The non-aqueous electrolyte may further comprise an additive. The additive may comprise, for example, a cyclic carbonate compound, a fluorine-substituted carbonate compound, a sultone compound, a cyclic sulfate compound, a cyclic sulfite compound, a phosphate compound, a borate compound, or the like. These may be used alone or in combination of two or more thereof.

The cyclic carbonate compound may comprise vinylene carbonate (VC), vinyl ethylene carbonate (VEC), or the like.

The fluorine-substituted cyclic carbonate compound may comprise fluoroethylene carbonate (FEC) or the like.

The sultone compound may comprise 1,3-propane sultone, 1,3-propene sultone, or 1,4-butane sultone, or the like.

The cyclic sulfate compound may comprise 1,2-ethylene sulfate, 1,2-propylene sulfate, or the like.

The cyclic sulfite compound may comprise ethylene sulfite, butylene sulfite, or the like.

The phosphate compound may comprise lithium difluoro bis(oxalato) phosphate, lithium difluoro phosphate, or the like.

The borate compound may comprise lithium bis(oxalate) borate, or the like.

In some embodiments, a solid electrolyte may be used in place of the above-described non-aqueous electrolyte. In this case, the lithium secondary battery may be manufactured in the form of an all-solid-state battery. In some embodiments, a solid electrolyte layer may be disposed between the cathode 110 and the anode 110 in place of the above-described separation membrane 130.

The solid electrolyte may comprise a sulfide-based electrolyte. As a non-limiting example, the sulfide-based electrolyte may comprise $Li_2S-P_2S_5$, $Li_2S-P_2S_5-LiCl$, $Li_2S-P_2S_5-LiBr$, $Li_2S-P_2S_3-LiCl-LiBr$, $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_3-Z_mS_n$ (m and n are positive numbers, Z is Ge, Zn or Ga), $Li_2S-GeS_2$, $Li_2S-SiS_2-Li_3PO_4$, $Li_2S-SiS_2-Li_pmO_q$ (p and q are positive numbers, M is P, Si, Ge, B, Al, Ga or In), $Li_7-xPS_6-xCl_x$ $(0 \leq x \leq 2)$, $Li_7-xPS_6-xBr_x$ $(0 \leq x \leq 2)$, $Li_7-xPS_6-xI_x$ $(0 \leq x \leq 2)$, or the like. These may be used alone or in combination of two or more thereof.

In one embodiment, the solid electrolyte may also comprise an oxide-based amorphous solid electrolyte, such as, for example, $Li_2O-B_2O_3-P_2O_5$, $Li_2O-SiO_2$, $Li_2O-B_2O_3$, $Li_2O-B_2O_3-ZnO$, or the like.

Electrode tabs (a cathode tab and an anode tab) may protrude from the cathode current collector 112 and the anode current collector 122, respectively, and may extend to one side of the case 140. The electrode tabs may be fused together with the one side of the case 140 to form electrode leads (a cathode lead and an anode lead) that extend or are exposed to the outside of the case 140.

In exemplary embodiments, the case 140 may have a cylindrical shape.

In exemplary embodiments, the secondary battery may be provided as a cylindrical secondary battery. Accordingly, the effect resulting from the loading amount ratio of the above-described cathode 110 may be further improved.

The invention relates also to the following numbered aspects:

Aspect 1. A secondary battery comprising an electrode assembly which comprises a cathode, an anode disposed opposite to the cathode, and a separation membrane disposed between the cathode and the anode, which is wound around a winding core;
wherein the cathode comprises:

a cathode current collector comprising a first surface and a second surface that face each other;
a first cathode active material layer disposed on the first surface; and
a second cathode active material layer disposed on the second surface,

wherein the secondary battery satisfies Equation 1:

[Equation 1]

$$Y = AX^2 - BX + C;$$

wherein X denotes a diameter of the winding core, Y denotes a loading amount gap defined by Equation 2, A is 0.0062 to 0.013, B is 0.1242 to 0.2622, and C is 0.943 to 1.9907;

[Equation 2]:

$$\text{Loading amount gap (mg/cm}^2) = LW2 - LW1$$

wherein LW1 denotes a loading amount (mg/cm$^2$) of the first cathode active material layer, and LW2 denotes a loading amount (mg/cm$^2$) of the second cathode active material layer.

Aspect 2. The secondary battery according to aspect 1, wherein the first cathode active material layer is positioned closer to the winding core than the second cathode active material layer.

Aspect 3. The secondary battery according to aspect 1 or 2, wherein X in Equation 1 is 3 mm to 8 mm.

Aspect 4. The secondary battery according to any one of aspect 1 to 3, wherein the loading amount gap is 0.3 mg/cm$^2$ to 1.1 mg/cm$^2$.

Aspect 5. The secondary battery according to any one of aspect 1 to 4, wherein the loading amount gap is 0.45 mg/cm$^2$ to 0.8 mg/cm$^2$.

Aspect 6. The secondary battery according to any one of aspect 1 to 5, wherein LW1 in Equation 2 is 7.6 mg/cm$^2$ to 49.6 mg/cm$^2$.

Aspect 7. The secondary battery according to any one of aspect 1 to 6, wherein LW2 in Equation 2 is 8 mg/cm$^2$ to 50 mg/cm$^2$.

Aspect 8. The secondary battery according to any one of aspect 1 to 7, wherein an overall density of the first cathode active material layer and the second cathode active material layer is 3.2 g/cm$^3$ to 3.8 g/cm$^3$.

Aspect 9. The secondary battery according to any one of aspect 1 to 8, wherein an average of LW1 and LW2 of Equation 2 is 16 mg/cm$^2$ to 30 mg/cm$^2$.

Aspect 10. The secondary battery according to any one of aspect 1 to 9, further comprising a case in which the electrode assembly is accommodated.

Aspect 11. The secondary battery according to aspect 10, wherein the case has a cylindrical shape.

Aspect 12. The secondary battery according to any one of aspect 1 to 11, wherein the electrode assembly comprises a jelly roll structure repeatedly wound around the winding core.

**EXAMPLES**

**Example A- Fabrication of Cathode**

$NiSO_4$, $CoSO_4$ and $MnSO_4$ were introduced and mixed at a molar ratio of 0.8:0.1:0.1 in distilled water from which dissolved oxygen had been removed , by bubbling N2 through it for 24 hours to prepare a mixed solution. The mixed solution was introduced into a reactor at 55 °C, and a co-precipitation reaction was performed for 36 hours using NaOH as a precipitant and $NH_3H_2O$ as a chelating agent to obtain $Ni_{0.8}Co_{0.1}Mn_{0.1}(OH)_2$ as a transition metal precursor. The transition metal precursor was dried at 80 °C for 12 hours, and further dried at 110 °C for additional 12 hours.

Lithium hydroxide and the transition metal precursor were added to a dry high-speed mixer at a ratio of 1.05:1 and uniformly mixed for 5 minutes. The mixture was placed in a calcination furnace under an oxygen atmosphere, heated to 950 °C at a heating rate of 2 °C/min, and maintained at 950 °C for 12 hours. Oxygen gas was continuously supplied at a flow rate of 10 mL/min during the heating and calcination. After completion of the calcination, the calcined product was naturally cooled to room temperature, and then pulverized and classified to obtain cathode active material having a composition of $LiNi_{0.8}Co_{0.1}Mn_{0.1}O_2$ (median particle diameter (D50): 10 $\mu$m).

The cathode active material, carbon black as a conductive material, and PVDF as a binder were mixed at a mass ratio of 95:3:2 to prepare a cathode slurry. The cathode slurry was coated on both surfaces of an aluminum current collector, and then dried and roll-pressed to fabricate a cathode including a first cathode active material layer and a second cathode active material layer.

The loading amounts of the first cathode active material layer and the second cathode active material layer and the loading amount gap defined by Equation 2 were adjusted as shown in Table 1 below, which lists the results of examples 1-17 and comparative examples 1 to 5.

**Example B- Manufacture of secondary battery**

An anode slurry, which included 93 wt% of natural graphite as an anode active material, 5 wt% of flake type graphite (KS6) as a conductive material, 1 wt% of styrene-butadiene rubber (SBR) as a binder, and 1 wt% of carboxymethyl cellulose (CMC) as a thickener, was prepared. The anode slurry was coated on both surfaces of a copper current collector, and then dried and roll-pressed to prepare an anode.

The anode, a separation membrane (polyethylene, thickness: 25 $\mu$m), and the cathode were repeatedly stacked to form an electrode assembly. The electrode assembly was repeatedly wound around a core pin, and then the core pin was removed to form a winding structure. The structure was wound such that the first cathode active material layer was positioned closer to the core pin than the second cathode active material layer.

The winding core diameter of the winding structure was the same as that of the core pin.

A metal rod having a diameter (winding core diameter) as shown in Table 1 was used as a core pin.

The winding structure was placed in a cylindrical case, and an electrolyte was injected. Then, a cap was mounted and clamped.

The electrolyte used herein was prepared by adding 2.0 vol% of fluoroethylene carbonate (FEC) to a 1M $LiPF_6$ solution prepared using a mixed solvent of EC/EMC (3:7; volume ratio) based on the total volume of the electrolyte. After clamping, the structure was impregnated for 3 to 24 hours, and then three charge/discharge cycles were performed at 0.1C (charging conditions: CC-CV 0.1C 0.01V 0.01C CUT-OFF, discharging conditions: CC 0.1C 1.5V CUT-OFF).

**Example C- Measurement of CA ratio of core portion and end portion**

The CA ratios of the secondary batteries of the above-described examples and comparative examples were measured at the core portion and the end portion, respectively.

Charging (CC-CV 0.1C 4.3V, 0.05C CUT-OFF) and discharging (CC 0.1C 3.0V CUT-OFF) were repeated on the secondary batteries three times in a 25 °C chamber, and the discharge capacity of the cathode at each of the core portion and the end portion was measured.

Charging (CC-CV 0.1C 0.01V, 0.01C CUT-OFF) and discharging (CC 0.1C 1.5V CUT-OFF) were repeated on the secondary batteries three times in a 25 °C chamber, and the discharge capacity of the anode at each of the core portion and the end portion was measured.

Each CA ratio of the core portion and the end portion were calculated by substituting the discharge capacity values into Equation 3.

**Example D: Evaluation of the presence of lithium precipitation**

Charging (CC-CV 0.5C 4.3V 0.05C CUT-OFF) and discharging (CC 1.0C 2.5V CUT-OFF) were repeated on the secondary batteries of the above-described examples and comparative examples 100 times in a 25 °C chamber. The secondary batteries were disassembled, and lithium precipitation in the electrode assembly was visually observed and evaluated as follows:

○: Lithium precipitation was observed
X: Lithium precipitation was not observed

**Example E: Evaluation of capacity retention rate**

Charging (CC-CV 0.5C 4.3V 0.05C CUT-OFF) and discharging (CC 1.0C 2.5V CUT-OFF) were repeated on the secondary batteries of the above-described examples and comparative examples 100 times in a 25 °C chamber. Then, the discharge capacity at 100th cycle was divided by the discharge capacity at the 1st cycle and multiplied by 100 to evaluate the capacity retention rate.

The measurement and evaluation results are shown in Table 2.

The loading amount of the first cathode active material layer (LW1), the loading amount of the second cathode active material layer (LW2), the loading amount gap defined by Equation 2, and the winding core diameter (the diameter of the core pin) are shown in Table 1 below.

[TABLE 1]

|  | LW2 (mg/cm$^2$) | LW1 (mg/cm$^2$) | Loading amount gap (Y) (mg/cm$^2$) | Winding core diameter (X) (mm) |
|---|---|---|---|---|
| Example 1 | 10.44 | 10.14 | 0.3 | 6 |
| Example 2 | 16.64 | 16.19 | 0.45 | 6 |
| Example 3 | 22.42 | 21.82 | 0.6 | 6 |
| Example 4 | 31.22 | 30.42 | 0.8 | 6 |
| Example 5 | 41.10 | 40.00 | 1.1 | 6 |
| Example 6 | 8.04 | 7.79 | 0.25 | 6 |
| Example 7 | 48.26 | 47.06 | 1.2 | 6 |
| Example 8 | 7.95 | 7.65 | 0.3 | 6 |
| Example 9 | 50.04 | 49.21 | 0.83 | 6 |
| Example 10 | 7.88 | 7.58 | 0.3 | 6 |
| Example 11 | 50.70 | 49.82 | 0.88 | 6 |
| Example 12 | 23.40 | 22.50 | 0.9 | 3 |
| Example 13 | 22.72 | 21.92 | 0.8 | 4 |
| Example 14 | 22.42 | 21.82 | 0.6 | 6 |
| Example 15 | 22.24 | 21.74 | 0.5 | 8 |
| Example 16 | 19.66 | 18.76 | 0.9 | 2 |
| Example 17 | 22.26 | 21.66 | 0.6 | 9 |
| Comparative Example 1 | 15.975 | 15.975 | 0 | 6 |
| Comparative Example 2 | 21.5 | 21.5 | 0 | 6 |
| Comparative Example 3 | 30 | 30 | 0 | 6 |
| Comparative Example 4 | 16.97 | 16.67 | 0.3 | 6 |
| Comparative Example 5 | 26.68 | 25.58 | 1.1 | 6 |

The CA ratios of each of the core portion and the end portion according to Equation 3, the difference in CA ratio between the core portion and the end portion, the presence of lithium precipitation, and the capacity retention rate are shown in Table 2 below.

[TABLE 2]

|  | CA ratio of core portion (%) | CA ratio of end portion (%) | Difference in CA ratio (%) | Presence of lithium precipitation | Capacity retention rate (100 cycles, %) |
|---|---|---|---|---|---|
| Example 1 | 98.8 | 99.0 | 0.2 | X | 92.5 |
| Example 2 | 98.0 | 98.0 | 0 | X | 93.3 |
| Example 3 | 98.4 | 98.4 | 0 | X | 93.5 |
| Example 4 | 99.2 | 99.2 | 0 | X | 93.7 |

(continued)

|  | CA ratio of core portion (%) | CA ratio of end portion (%) | Difference in CA ratio (%) | Presence of lithium precipitation | Capacity retention rate (100 cycles, %) |
|---|---|---|---|---|---|
| Example 5 | 98.9 | 98.9 | 0 | X | 93.5 |
| Example 6 | 98.3 | 98.4 | 0.1 | X | 92.8 |
| Example 7 | 98.0 | 98.0 | 0.0 | X | 92.3 |
| Example 8 | 98.6 | 98.6 | 0 | X | 91.2 |
| Example 9 | 98.4 | 98.4 | 0 | X | 91.0 |
| Example 10 | 98.3 | 98.3 | 0 | X | 90.5 |
| Example 11 | 98.2 | 98.2 | 0 | X | 90.9 |
| Example 12 | 99.1 | 99.1 | 0 | X | 91.8 |
| Example 13 | 98.8 | 98.8 | 0 | X | 92.8 |
| Example 14 | 98.4 | 98.4 | 0 | X | 93.0 |
| Example 15 | 98.2 | 98.2 | 0 | X | 92.6 |
| Example 16 | 99.3 | 99.3 | 0 | X | 90.4 |
| Example 17 | 98.0 | 98.3 | 0.3 | X | 90.7 |
| Comparative Example 1 | 100 | 97.6 | 2.4 | ○ | 82.3 |
| Comparative Example 2 | 100 | 97.0 | 3.0 | ○ | 81.5 |
| Comparative Example 3 | 100 | 97.0 | 3.0 | ○ | 80.0 |
| Comparative Example 4 | 99.6 | 99.2 | 0.4 | ○ | 84.9 |
| Comparative Example 5 | 98.6 | 97.5 | 1.1 | ○ | 84.6 |

Referring to Tables 1 and 2, in the examples satisfying Equation 1, lithium precipitation was suppressed and the capacity retention rate was improved compared to the comparative examples.

In Examples 6 and 7, where the loading amount gap (Y) according to Equation 2 was outside the range of 0.3 mg/cm$^2$ to 1.1 mg/cm$^2$, the capacity retention rate was relatively decreased compared to the other examples.

In Examples 8 and 9, where the loading amount (LW2) of the second cathode active material layer was outside the range of 8 mg/cm$^2$ to 50 mg/cm$^2$, the capacity retention rate was relatively decreased compared to the other examples.

In Examples 10 and 11, where the loading amount (LW1) of the first cathode active material layer was outside the range of 7.6 mg/cm$^2$ to 49.6 mg/cm$^2$, the capacity retention rate was relatively decreased compared to the other examples.

In Examples 16 and 17, where the winding core diameter was outside the range of 3 mm to 8 mm, the capacity retention rate was relatively decreased compared to the other examples.

## Example F: Evaluation of changes depending on cathode density and average loading amount for average loading amount of 16 mg/cm$^2$

The ratio of the total mass of the first and second cathode active material layers to the total volume of the first and second cathode active material layers was expressed as the cathode density.

Secondary batteries were manufactured in the same manner as in Example 2, except that the cathode density and the winding core diameter were adjusted as shown in Table 3 below, and the average of LW1 and LW2 was adjusted to be 16 mg/cm$^2$.

The winding core diameter was adjusted using a metal rod having a diameter (winding core diameter) as shown in Table 3. The average was calculated by adding LW1 and LW2 and dividing the sum by 2.

In Table 3, the presence of lithium precipitation was evaluated in the same manner as described in Example D.

[TABLE 3]

| | Cathode density (g/cm$^3$) | Winding core diameter (mm) | Loading amount gap (mg/cm$^2$) | Presence of lithium precipitation |
|---|---|---|---|---|
| Example 18 | 3.2 | 3 | 0.74 | X |
| Example 19 | | 4 | 0.66 | X |
| Example 20 | | 6 | 0.49 | X |
| Example 21 | | 8 | 0.41 | X |
| Example 22 | 3.5 | 3 | 0.68 | X |
| Example 23 | | 4 | 0.60 | X |
| Example 24 | | 6 | 0.45 | X |
| Example 25 | | 8 | 0.38 | X |
| Example 26 | 3.8 | 3 | 0.63 | X |
| Example 27 | | 4 | 0.55 | X |
| Example 28 | | 6 | 0.43 | X |
| Example 29 | | 8 | 0.35 | X |

## Example G: Evaluation of changes depending on cathode density and average loading amount for an average loading amount of 21.5 mg/cm$^2$

The ratio of the total mass of the first and second cathode active material layers to the total volume of the first and second cathode active material layers was expressed as the cathode density.

Secondary batteries were manufactured in the same manner as in Example 2, except that the cathode density and the winding core diameter were adjusted as shown in Table 4 below, and the average of LW1 and LW2 was adjusted to be 21.5 mg/cm$^2$.

The winding core diameter was adjusted using a metal rod having a diameter (winding core diameter) as shown in Table 4. The average was calculated by adding LW1 and LW2 and dividing the sum by 2.

In Table 4, the presence of lithium precipitation was evaluated in the same manner as described in Example D.

[TABLE 4]

| | Cathode density (g/cm$^3$) | Winding core diameter (mm) | Loading amount gap (mg/cm$^2$) | Presence of lithium precipitation |
|---|---|---|---|---|
| Example 30 | 3.2 | 3 | 0.98 | X |
| Example 31 | | 4 | 0.88 | X |
| Example 32 | | 6 | 0.66 | X |
| Example 33 | | 8 | 0.55 | X |
| Example 34 | 3.5 | 3 | 0.90 | X |
| Example 35 | | 4 | 0.80 | X |
| Example 36 | | 6 | 0.60 | X |
| Example 37 | | 8 | 0.50 | X |
| Example 38 | 3.8 | 3 | 0.83 | X |
| Example 39 | | 4 | 0.74 | X |
| Example 40 | | 6 | 0.55 | X |
| Example 41 | | 8 | 0.46 | X |

**Example H: Evaluation of changes depending on cathode density and average loading amount for an average loading amount of 30 mg/cm²**

The ratio of the total mass of the first and second cathode active material layers to the total volume of the first and second cathode active material layers was expressed as the cathode density.

Secondary batteries were manufactured in the same manner as in Example 2, except that the cathode density and the winding core diameter were adjusted as shown in Table 5 below, and the average of LW1 and LW2 was adjusted to be 30 mg/cm².

The winding core diameter was adjusted using a metal rod having a diameter (winding core diameter) as shown in Table 5. The average was calculated by adding LW1 and LW2 and dividing the sum by 2.

In Table 5, the presence of lithium precipitation was evaluated in the same manner as described in Example D.

[TABLE 5]

| | Cathode density (g/cm³) | Winding core diameter (mm) | Loading amount gap (mg/cm²) | Presence of lithium precipitation |
|---|---|---|---|---|
| Example 42 | 3.2 | 3 | 1.31 | X |
| Example 43 | | 4 | 1.14 | X |
| Example 44 | | 6 | 0.88 | X |
| Example 45 | | 8 | 0.72 | X |
| Example 46 | 3.5 | 3 | 1.20 | X |
| Example 47 | | 4 | 1.07 | X |
| Example 48 | | 6 | 0.80 | X |
| Example 49 | | 8 | 0.67 | X |
| Example 50 | 3.8 | 3 | 1.11 | X |
| Example 51 | | 4 | 0.98 | X |
| Example 52 | | 6 | 0.74 | X |
| Example 53 | | 8 | 0.61 | X |

Referring to Tables 3 to 5, in the secondary batteries according to the examples, even when the cathode density was variably adjusted within the range of 3.2 g/cm³ to 3.8 g/cm³, lithium was not precipitated as long as Equation 1 was satisfied, thereby improving long-term cycle life characteristics.

In the secondary batteries according to the examples, even when the average loading amount of the first cathode active material layer and the second cathode active material layer was variably adjusted within the range of 16 mg/cm² to 30 mg/cm², lithium was not precipitated as long as Equation 1 was satisfied, thereby improving long-term cycle life characteristics.

**Claims**

1. A secondary battery comprising an electrode assembly which comprises a cathode, an anode disposed opposite to the cathode, and a separation membrane disposed between the cathode and the anode, which is wound around a winding core;

   wherein the cathode comprises:

   a cathode current collector comprising a first surface and a second surface that face each other;
   a first cathode active material layer disposed on the first surface; and
   a second cathode active material layer disposed on the second surface,
   wherein the secondary battery satisfies Equation 1:

[Equation 1]

$$Y = AX^2 - BX + C;$$

wherein X denotes a diameter of the winding core, Y denotes a loading amount gap defined by Equation 2, A is 0.0062 to 0.013, B is 0.1242 to 0.2622, and C is 0.943 to 1.9907;

[Equation 2]:

$$\text{Loading amount gap } (mg/cm^2) = LW2 - LW1$$

wherein LW1 denotes a loading amount ($mg/cm^2$) of the first cathode active material layer, and LW2 denotes a loading amount ($mg/cm^2$) of the second cathode active material layer.

2. The secondary battery according to claim 1, wherein the first cathode active material layer is positioned closer to the winding core than the second cathode active material layer.

3. The secondary battery according to claim 1 or 2, wherein X in Equation 1 is 3 mm to 8 mm.

4. The secondary battery according to any one of claim 1 to 3, wherein the loading amount gap is 0.3 $mg/cm^2$ to 1.1 $mg/cm^2$.

5. The secondary battery according to any one of claim 1 to 4, wherein the loading amount gap is 0.45 $mg/cm^2$ to 0.8 $mg/cm^2$.

6. The secondary battery according to any one of claim 1 to 5, wherein LW1 in Equation 2 is 7.6 $mg/cm^2$ to 49.6 $mg/cm^2$.

7. The secondary battery according to any one of claim 1 to 6, wherein LW2 in Equation 2 is 8 $mg/cm^2$ to 50 $mg/cm^2$.

8. The secondary battery according to any one of claim 1 to 7, wherein an overall density of the first cathode active material layer and the second cathode active material layer is 3.2 $g/cm^3$ to 3.8 $g/cm^3$.

9. The secondary battery according to any one of claim 1 to 8, wherein an average of LW1 and LW2 of Equation 2 is 16 $mg/cm^2$ to 30 $mg/cm^2$.

10. The secondary battery according to any one of claim 1 to 9, further comprising a case in which the electrode assembly is accommodated.

11. The secondary battery according to claim 10, wherein the case has a cylindrical shape.

12. The secondary battery according to any one of claim 1 to 11, wherein the electrode assembly comprises a jelly roll structure repeatedly wound around the winding core.

**FIG. 1**

**FIG. 2**

**FIG. 3**

FIG. 4

**FIG. 5**

**EUROPEAN SEARCH REPORT**

Application Number

EP 25 19 5019

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 101 212 039 A (BYD CO LTD [CN]) 2 July 2008 (2008-07-02) * abstract * * page 12, lines 14-19 * * examples 2, 5, 6 * ----- | 1-12 | INV. H01M10/0587 ADD. H01M4/02 |
| A | KR 2022 0061550 A (LG ENERGY SOLUTION LTD [KR]) 13 May 2022 (2022-05-13) * abstract * ----- | 1-12 | |
| A | KR 2021 0012621 A (LG CHEMICAL LTD [KR]) 3 February 2021 (2021-02-03) * abstract * ----- | 1-12 | |
| A | US 2022/278308 A1 (JEONG HYUN KI [KR] ET AL) 1 September 2022 (2022-09-01) * abstract * ----- | 1-12 | |

TECHNICAL FIELDS SEARCHED (IPC)

H01M

The present search report has been drawn up for all claims

| Place of search | Date of completion of the search | Examiner |
|---|---|---|
| The Hague | 9 December 2025 | Rosciano, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 19 5019

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2025

| Patent document cited in search report | | Publication date | Patent family member(s) | | Publication date |
|---|---|---|---|---|---|
| CN 101212039 | A | 02-07-2008 | NONE | | |
| KR 20220061550 | A | 13-05-2022 | NONE | | |
| KR 20210012621 | A | 03-02-2021 | NONE | | |
| US 2022278308 | A1 | 01-09-2022 | CN | 114223070 A | 22-03-2022 |
| | | | EP | 4016691 A1 | 22-06-2022 |
| | | | KR | 20210019846 A | 23-02-2021 |
| | | | US | 2022278308 A1 | 01-09-2022 |
| | | | WO | 2021029597 A1 | 18-02-2021 |

EPO FORM P0459

For more details about this annex : see Official Journal of the European Patent Office, No. 12/82